# EUROPEAN PATENT SPECIFICATION

(11) **EP 0 993 365 B1**
(45) Date of publication and mention of the grant of the patent: **28.05.2003**
(21) Application number: 99908605.1
(22) Date of filing: 01.03.1999
(51) Int. Cl.: B29D 11/00

(54) **METHOD OF MOLDING CONTACT LENSES**
VERFAHREN ZUM GIESSEN VON KONTAKTLINSEN
PROCEDE DE MOULAGE DE LENTILLES DE CONTACT

(30) Priority: 17.03.1998 US 78300 P
(43) Date of publication of application: 19.04.2000
(73) Proprietor: BAUSCH & LOMB INCORPORATED, Rochester, New York 14604-2701 (US)
(72) Inventor: RUSCIO, Dominic, V., Webster, NY 14580 (US)
(74) Representative: Rackham, Anthony Charles
(86) International application number: US9904493
(87) International publication number: WO99047344

(56) References cited:
- EP-A- 0 451 858
- WO-A-94/07684
- WO-A-97/46617
- US-A- 4 208 364

## Description

The present invention relates to improvements in casting of contact lenses.

A method known, in general, for manufacturing contact lenses is static cast molding. Cast molding of contact lenses involves depositing a curable mixture of polymerizable monomers in a mold cavity formed by two mold sections, curing the monomer mixture, and disassembling the mold assembly and removing the lens. One mold section forms the anterior lens surface (anterior mold section), and the other mold section forms the posterior lens surface (posterior mold section).

WO94/07684 discloses such a process in which at least one of the mold sections is formed from a master mold which includes a tool constructed of a plastic resin and comprising an optically smooth surface for forming the molding surface of the mold sections.

Another known method is referred to as spincasting, which involves charging the monomer mixture to a mold section shaped to form the anterior lens surface, and spinning the mold in a controlled manner while exposing the monomer mixture to light.

In each of the above methods, prior to molding of the contact lens, each of the mold sections is formed. Conventional methods involve injection molding the molds sections from a resin in the cavity of an injection molding apparatus. Typically, the mold sections are used only once for casting a lens and then discarded. Accordingly, the subprocess of mold sections forms an important part of the overall lens manufacturing system.

A wide variety of materials are known for use as mold materials for casting contact lenses, especially thermoplastic crystalline polymers such as polypropylene and thermoplastic amorphous polymers such as polyvinyl chloride and polystyrene.

WO97/46617 discloses blends of cyclic olefins and styrene-containing elastomers useful as molding compositions to mold articles such as optical discs and lenses. It would be desirable to improve manufacturing of contact lenses with mold materials better adapted to such manufacturing processes.

According to the invention there is provided a method of casting a lens that comprises curing a lens-forming mixture in a mold having a molding surface in which the mold is injection molded from an amorphous copolymer of ethylene and a cyclic olefin.

It has been found that this class of resins are compatible with conventional contact lens materials, and offer various improvements in casting of contact lenses.

A conventional manner of casting contact lenses involves casting the lens in a mold assembly including a posterior mold section having a posterior optical surface (which forms the posterior surface of the cast lens), and an anterior mold having an anterior optical surface (which forms the anterior surface of the molded lens). A monomer mixture of desired lens-forming monomers is added to one of the mold sections, typically the anterior mold section, and the mold sections are assembled to contain the monomer mixture in a mold cavity formed between the two defining surfaces of the mold sections and substantially corresponding to the desired shape of the contact lens. Subsequent to assembling the mold sections, the monomer mixture is polymerized, such as by exposure to UV light and/or heat, followed by disassembling the mold assembly and removing the molded lens therefrom. Other processing steps may be included following casting, such as lens inspection, lens sterilization and lens packaging.

As mentioned, prior to molding of the contact lens, each of the mold sections is formed, conventionally by injection molding the molds sections from a resin in the cavity of an injection molding apparatus. According to the invention, at least one of the anterior and posterior mold sections is injection molded from an amorphous copolymer of ethylene and a cyclic olefin. Preferred are the following random copolymers: 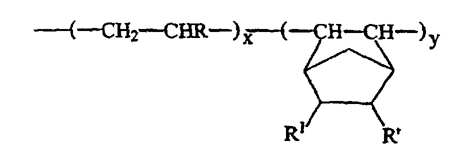 wherein R is hydrogen or C₁-C₄ alkyl, preferably hydrogen;
each R' is independently hydrogen or C₁-C₄ alkyl, preferably hydrogen or methyl; and
x and y are at least 1.
These materials are available from Hoechst Celanese Corporation, Summit, New Jersey, USA.

The mold sections may be injection molded from the subject amorphous copolymers by methods generally known in the art. The tools for the injection molding are typically made from brass, stainless steel or nickel or some combination thereof. A preferred material for use with this invention is nickel-plated brass. A desired surface is machined and polished on the tools to achieve precision surface quality so that no surface imperfections are transferred to the mold section being injection molded therefrom.

This class of copolymers offers various advantages over conventional materials used in contact lens manufacturing processes.

First, this copolymer has better chemical compatibility with the monomer mixtures from which the contact lenses are cast. For example, certain monomer mixtures have a tendency to chemically interact with PVC, resulting in surface defects in the PVC molding surface which translates to surface defects in the lens surface cast in this mold section. Polypropylene is typically provided with additives that can migrate to the molding surface of mold sections, such additives interacting with monomer mixtures cast on this surface, resulting either in surface defects in the lens or undesired additives being present in the surface of the cast lens. Polystyrene can interact with certain monomer mixtures, similar to PVC, resulting in surface defects; also polystyrene can be difficult to wet when the monomer mixture is added thereto, i.e., the monomer mixture tends not to uniformly wet the molding surface of polystyrene molds, resulting in voids at the surface of the cast lenses.

Second, this copolymer exhibits relatively low shrinkage during and after injection molding, which is important to ensure predictability in the molding process. Stated differently, other plastic systems, especially polypropylene, exhibit noticeable shrinking during and after injection molding. When casting a contact lens in the mold section, requiring precision casting to ensure desired optical properties, it then becomes necessary to use the molds in the contact lens casting operation within a certain time window, to avoid casting lenses in molds that have shrunk excessively. In contrast, the subject copolymer exhibits sufficiently low shrinkage that one does not need to control the time that the mold sections are stored prior to casting a lens. Further, whereas polypropylene is sensitive to relatively minor process changes, the subject copolymer is less sensitive to molding tolerances, which is important for multi-cavity injection molding processes.

Third, the subject copolymer is well adapted for curing processes. Curing of monomer mixtures typically involves curing the monomer mixture by exposure to UV or visible light, wherein radiation is directed through the mold to cure the monomer mixture contained therein, or by thermal curing wherein the monomer mixture contained in the mold is subject to elevated temperature to effect curing. As a first example, this copolymer has very high light transmissibility, especially compared to polypropylene. Therefore, for curing operations employing light-induced polymerization, the higher transmissiblity of the mold material permits a more efficient curing process. As a second example, this copolymer has a relatively high glass transition temperature, especially compared to polystyrene. Therefore, for curing operations employing thermal-induced polymerization, higher cure temperatures can be employed if desired.

The copolymer is also useful in molds adapted for other casting operations, such as spincasting, which, as previously mentioned, involves charging the monomer mixture to a mold section shaped to form the anterior lens surface, and spinning the mold in a controlled manner while exposing the monomer mixture to light. As another example, "semi-finished" lenses may be cast in a mold section having either an anterior or posterior molding surface to form respective anterior or posterior lens surface, followed by lathing this semi-finished lens to form the other of the anterior or posterior lens surface. Due to the rigidity of the subject copolymer, mold sections made of this copolymer are more suitable for mounting, along with the semi-finished lens, in the collet of the lathe, the rigidity of the mold section avoiding distortion from pressure exerted by the collet.

Finally, the described amorphous cyclic olefin copolymers also exhibit extremely low water absorption and excellent water vapor barrier properties. Thus, these materials also lend themselves for use in contact lens packages. Such packages, often referred to as "blister packages", include a flange with a depression for holding a contact lens and a saline solution. A foil sheet is sealed to the flange about the periphery of the depression to sealingly enclose the contact lens therein. Such blister packages are typically made of polypropylene, but due to the improved water absorption and water vapor barrier properties of the subject copolymers, these copolymers offer advantages over conventional contact lens packaging materials.

## Claims

1. A method of casting a lens that comprises curing a lens-forming mixture in a mold having a molding surface **characterised in that** the mold is injection molded from an amorphous copolymer of ethylene and a cyclic olefin.

2. A method as claimed in Claim 1 in which the cyclic olefin is norbornene.

3. A method as claimed in Claim 1 or Claim 2 in which the lens is a contact lens.

4. A method as claimed in any preceding claim in which the lens is cast between molding surfaces of first and second mold sections of a mold assembly, one molding surface being shaped to form an anterior lens surface, and the other mold section forms the posterior lens surface, at least one of said mold sections being molded from said amorphous copolymer.

## Patentansprüche

1. Verfahren zum Gießen einer Linse, das ein Härten einer eine Linse bildenden Mischung in einer Form, die eine Form-Oberfläche aufweist, umfaßt, **dadurch gekennzeichnet, daß** die Form durch Spritzgießen geformt wurde aus einem amorphen Copolymer von Ethylen und einem cyclischen Olefin.

2. Verfahren nach Anspruch 1, in dem das cyclische Olefin Norbornen ist.

3. Verfahren nach Anspruch 1 oder Anspruch 2, in dem die Linse eine Kontaktlinse ist.

4. Verfahren nach einem der vorangehenden Ansprüche, in dem die Linse zwischen Form-Oberflächen erster und zweiter Form-Abschnitte einer Form-Anordnung gegossen wird, wobei eine Form-Oberfläche zum Formen einer vorderen Linsen-Oberfläche ausgebildet ist und der andere Form-Abschnitt die hintere Linsen-Oberfläche ausbildet, wobei wenigstens einer der Form-Abschnitte aus dem amorphen Copolymer geformt ist.

## Revendications

1. Procédé de coulage d'une lentille qui comprend le durcissement d'un mélange de formation de lentille dans un moule comportant une surface de moulage, **caractérisé en ce que** le moule est moulé par injection à partir d'un copolymère amorphe d'éthylène et d'une oléfine cyclique.

2. Procédé suivant la revendication 1, dans lequel l'oléfine cyclique est du norbomène.

3. Procédé suivant l'une ou l'autre des revendications 1 et 2, dans lequel la lentille est une lentille de contact.

4. Procédé suivant l'une quelconque des revendications précédentes, dans lequel la lentille est coulée entre des surfaces de moulage d'une première et d'une seconde section de moule d'un assemblage de moule, une surface de moulage étant façonnée pour former une surface de lentille antérieure, et l'autre section de moule forme la surface de lentille postérieure, au moins une desdites sections de moule étant moulée à partir du copolymère amorphe précité.
